# FASCICULE DE BREVET EUROPEEN

(11) **EP 0 964 288 B1**
(45) Date de publication et mention de la délivrance du brevet: **08.12.2010**
(21) Numéro de dépôt: 99401404.1
(22) Date de dépôt: 10.06.1999
(51) Int. Cl.: G02F 1/1333, G02F 1/1334, G02F 1/17

(54) **Système électrocommandable à propriétés optiques variables**
Elektrisch gesteuertes System mit variablen, optischen Eigenschaften
Electrically controllable system having variable optical properties

(30) Priorité: 10.06.1998 FR 9807277
(43) Date de publication de la demande: 15.12.1999
(73) Titulaire: Saint-Gobain Glass France, 92400 Courbevoie (FR)
(72) Inventeur: Lin, Xue Yun, 92260 Fontenay aux Roses (FR); Papret, Corinne, 92160 Antony (FR)
(74) Mandataire: Renous Chan, Véronique

(56) Documents cités:
- EP-A- 0 836 932
- WO-A-93/09460
- WO-A-93/14436
- US-A- 4 878 741
- US-A- 4 992 201
- US-A- 5 089 904
- US-A- 5 409 734
- US-A- 5 751 389

## Description

La présente invention concerne des systèmes électrocommandables à propriétés optiques variables, et plus précisément les vitrages dont on peut modifier la diffusion lumineuse et/ou la transmission lumineuse sous l'effet d'une alimentation électrique appropriée.

Il existe en effet une demande accrue pour les vitrages dits " intelligents " dont on peut moduler certaines des propriétés à volonté. Contrôler, modifier le niveau de diffusion lumineuse du vitrage permet ainsi de contrôler le degré de vision à travers le vitrage, notamment afin qu'il soit transparent ou au contraire diffusant, empêchant ainsi l'identification des personnes/objets de l'autre côté du vitrage. Les applications de tels vitrages sont variées : on peut ainsi penser à en équiper les cloisons internes entre les pièces dans un bâtiment, notamment dans des bureaux, ou entre deux zones/compartiments de moyens de locomotion terrestres, aériens ou maritimes, ou pour équiper des vitrines ou tout type de contenants. De manière générale, ils peuvent aussi équiper toute fenêtre de bâtiment ou de moyens de locomotion (fenêtre de train, hublots de cabine de bateau ou d'avions)

II existe actuellement différentes familles de systèmes fonctionnels à diffusion/transmission lumineuse électrocommandable (ci-après désignés sous le terme de " systèmes fonctionnels ").

Une première famille de systèmes fonctionnels est connue sous le terme de vitrage à cristaux liquides. Il est basé sur l'utilisation d'un film placé entre deux couches conductrices et à base d'une matière polymère, dans laquelle sont dispersées des gouttelettes de cristaux liquides, notamment nématiques à anisotropie diélectrique positive. Les cristaux liquides, quand le film est mis sous tension, s'orientent selon un axe privilégié, ce qui autorise la vision. Hors tension, en l'absence d'alignement des cristaux, le film devient diffusant et empêche la vision. Des exemples de tels films sont décrits notamment dans les brevets européen EP-0 238 164, et américains US-4 435 047, US-4 806 922, US-4 732 456. Ce type de film, une fois feuilleté et incorporé entre deux substrats en verre, est commercialisé par la société SAINT-GOBAIN VITRAGE sous la dénomination commerciale " Priva-Lite". On peut en fait utiliser tous les dispositifs à cristaux liquides connus sous les termes de cristaux "NCAP" (Nematic Curvilinearly Aligned Phase(s) ou " PLDC " (Polymer Dispersed Liquid Cristal).

Une autre famille est celle communément désignée sous le terme de valve optique : il s'agit généralement de films comprenant une matrice de polymère, éventuellement réticulé, dans laquelle sont dispersées des micro-gouttelettes contenant des particules qui présentent la propriété de se placer selon une direction privilégiée sous l'action d'un champ électrique ou magnétique. En fonction notamment du potentiel appliqué aux bornes des couches conductrices placées de part et d'autre de ces films et de la concentration et de la nature des particules orientables, les films présentent des propriétés optiques variables. Il est, par exemple, connu du brevet WO-93/09460 une valve optique à base d'un film comprenant une matrice en polyorganosiloxane réticulable et des particules orientables minérales ou organiques, plus particulièrement des particules absorbant la lumière telles que des particules de polyiodure. Quand le film est mis sous tension, les particules interceptent beaucoup moins la lumière que lorsqu'il est hors tension : ce système permet donc d'obtenir des vitrages à transmission lumineuse variable, généralement associée à une diffusion lumineuse également variable.

Qu'il s'agisse de valves optiques ou de systèmes à cristaux liquides, ces systèmes se présentent usuellement sous la forme d'un film de polymère. Afin d'assurer son alimentation électrique, on le dispose usuellement entre deux couches électroconductrices, notamment transparentes, par exemple en oxyde métallique dopé du type oxyde d'indium dopé à l'étain (ITO) ou oxyde d'étain dopé au fluor (SnO₂:F). En outre, le film avec ses deux couches conductrices est usuellement muni sur au moins une de ses faces, et de ce chacune d'entre elles, d'un substrat porteur/protecteur. Celui-ci est généralement transparent. Il peut être choisi rigide ou semi-rigide, minéral ou organique, par exemple être en verre, polymère acrylique du type polyméthacrylate de méthyle PMMA. Il peut aussi être flexible, notamment en polyéthylène téréphtalate PET. On peut avoir ainsi une structure du type PET/ITO/film fonctionnel/ITO/PET, qui se présente sous la forme d'une feuille souple aisément manipulable. Cet ensemble (polymère + couches électroconductrices + au moins un substrat porteur) peut ensuite être feuilleté à au moins un substrat rigide transparent du type verre à l'aide d'au moins une couche de polymère organique d'assemblage du type polyvinylbutyral PVB, éthylènevinylacétate EVA ou certains polyuréthanes PU.

On a cherché à ajouter d'autres fonctionnalités aux vitrages à cristaux liquides, notamment pour pouvoir jouer non seulement sur leur niveau de diffusion lumineuse mais aussi sur leur niveau de transmission lumineuse, en ayant recours à des colorants. Les brevets EP-0 156 615 et EP-0 121 415 décrivent ainsi, par exemple, des colorants du type pléochroïque que l'on dissout dans les gouttelettes de cristaux liquides, ce qui permet d'obtenir des vitrages à la fois foncés/colorés et diffusants à l'état hors tension, et à la fois clairs et non diffusants à l'état sous tension. On peut ainsi obtenir un effet de "volet" rendant plus attractive l'utilisation de ces vitrages pour des applications extérieures, par exemple comme vitrages de façade de bâtiment ou comme vitrages de toit-auto.

Cependant, ces applications extérieures sollicitent beaucoup les vitrages, et il s'est avéré que les systèmes fonctionnels avec colorants additionnels (comme les vitrages à cristaux liquides) ou les systèmes fonctionnels à particules polarisantes apportant elles-mêmes un effet colorant, notamment étant elles-mêmes de type dichroïque, tendaient à avoir une durée de vie nettement plus courte que ceux qui en étaient dépourvus, et de manière d'autant plus nette qu'ils étaient utilisés en extérieur.

L'invention a alors eu pour but de remédier à cet inconvénient, en proposant une amélioration des systèmes fonctionnels à diffusion/transmission lumineuse électrocommandable, tout particulièrement ceux utilisant des colorants ou des particules polarisantes à effet colorant, dichroïques, amélioration visant notamment à augmenter leur durée de vie, à augmenter leur durabilité.

L'invention a pour objet un système électrocommandable tel que décrit dans la revendication 1.

L'invention a en effet découvert le mécanisme qui provoquait le vieillissement prématuré des systèmes, mécanisme de photoréduction qui tendait à dégrader irréversiblement les colorants dichroïques et les particules polarisantes lorsque les systèmes étaient soumis à un rayonnement ultraviolet intense et/ou prolongé. La solution a alors consisté à mettre en oeuvre des moyens pour lutter contre cette dégradation, ces moyens visant soit à empêcher cette photoréduction, soit, préférentiellement, à permettre en quelque sorte de "régénérer " les colorants, mis sous forme réduite/dégradée en les réoxydant en permanence, en " compensant " ainsi la réduction photochimique subie par ceux-ci.

Selon une première variante, le moyen prévenant la dégradation par photoréduction comprend l'utilisation d'au moins une des deux couches électroconductrices sous forme d'une couche multi-composants comprenant une couche conductrice à base d'oxyde métallique dopé isolée physiquement du film fonctionnel par au moins une couche-barrière de nature chimique différente.

On entend par couche " multi-composants " une superposition d'au moins deux couches en des matériaux différents qui constituent globalement la " couche " électroconductrice au sens de l'invention. L'oxyde métallique dopé en question peut être de l'oxyde d'étain dopé, notamment au fluor SnO₂ : F, de l'oxyde d'indium dopé à l'étain ITO, de l'oxyde de zinc dopé, par exemple avec de l'aluminium, tous ces matériaux étant bien connus.

On entend par " isolée physiquement " le fait qu'il n'y ait pas de contact direct entre le film fonctionnel et la couche d'oxyde métallique dopé. Les inventeurs se sont en effet aperçu que c'est ce contact direct qui paraissait être le responsable de la dégradation prématurée du système, une hypothèse pour l'expliquer étant que l'oxyde métallique aurait des propriétés de photocatalyse suffisantes pour provoquer la dégradation du film qui lui est contigu. La solution de l'invention a donc consisté à avoir recours à une couche-barrière, pour pouvoir continuer à utiliser des couches électroconductrices en oxyde métallique dopé sans en supporter les inconvénients (ces couches sont en effet très intéressantes par ailleurs car on en maîtrise bien la fabrication, notamment par pyrolyse du type CVD ou par pulvérisation cathodique sous vide, et qu'elles permettent de concilier au mieux niveau de conductivité électrique et transparence).

Cette couche-barrière peut être essentiellement métallique, notamment en nickel, en chrome, en alliage nickel-chrome. Dans ce cas, elle est également conductrice sur le plan électrique, mais on préfère la choisir relativement fine pour éviter qu'elle ne modifie trop optiquement l'aspect du vitrage, pour conserver à la couche conductrice multi-composants son niveau de transparence.

La couche-barrière peut être aussi choisie en un matériau peu ou pas conducteur, comme le silicium, ou des dérivés du silicium notamment le dioxyde de silicium. Là encore, on a intérêt à la choisir la plus mince possible, l'épaisseur suffisante pour l'isolation physique évoquée plus haut. On peut aussi utiliser le nitrure de silicium Si₃N₄, l'oxynitrure de silicium SiON ou le nitrure d'aluminium A_{I}N. L'oxyde de silicium est, de façon non limitative, l'illustration préférée de la famille des diélectriques à base d'oxyde non photocatalytique.

Les couches-barrières ayant donc toutes avantageusement aucune ou quasiment aucune activité photocatalytique, sont donc choisies généralement d'un épaisseur inférieure à 10 nm et de préférence inférieure à 5 nm, par exemple comprise entre 0,5 et 3 nm. (On peut aussi superposer deux couches-barrières de natures différentes si on le souhaite). Une solution plus radicale consiste à supprimer l'utilisation des couches électroconductrices à base d'oxyde métallique dopé, au moins sur l'un des côtés du film fonctionnel, et à la remplacer par un matériau conducteur qui n'est pas à base d'oxyde.

Des modes de réalisation de cette variante peuvent être un système (par exemple déposé entre deux substrats souples, ou un souple et un rigide) :
1) ITO
2) couche-barrière NiCr ou SiO₂
3) film fonctionnel
4) couche-barrière NiCr ou SiO₂
5) ITO
avec les couches conductrices " bi-couches " identiques de chaque côté du film fonctionnel.

Selon une seconde variante, une des deux bi-couches peut être remplacée par une monocouche métallique, par exemple un alliage or-titane, ou une multicouche métallique, par exemple NiCr/Au/NiCr. On peut aussi combiner l'utilisation d'une couche multi-composants d'un côté du film fonctionnel avec une couche conductrice standard en oxyde métallique dopé: une seule couche conductrice selon l'invention confère déjà au système une durée de vie plus longue.

Les deux bi-couches peuvent aussi être remplacées par cette monocouche ou multicouche métallique. Le moyen prévenant la dégradation comprend alors la sélection d'au moins une couche électroconductrice essentiellement métallique (en supprimant alors complètement l'utilisation d'un matériau en oxyde métallique dopé dans au moins une des deux couches conductrices). Il s'est en effet avéré que substituer aux couches électroconductrices usuelles en oxyde dopé des couches métalliques, ou au moins une des deux, augmentait considérablement la durée de vie du système, sans que les raisons précises en soient complètement expliquées

Cette seconde variante a l'avantage de la simplicité de mise en oeuvre : les technologies de dépôt de couche mince de type métallique disponibles permettent effectivement d'en contrôler les paramètres, notamment la nature chimique, la densité, l'épaisseur, afin d'obtenir les propriétés recherchées, tout particulièrement ici un niveau de conductivité électrique suffisant combiné à un caractère transparent. On peut citer plus particulièrement la technologie de dépôt par pulvérisation cathodique assistée par champ magnétique.

La couche métallique peut être avantageusement à base d'argent ou d'or, généralement en métal noble ou alliage contenant au moins l'un d'entre eux. Dans ce cas, il est souhaitable que la couche soit munie sur au moins une de ses faces (de préférence sur ses deux faces) d'une couche protectrice et/ou à fonction d'accrochage plus mince, notamment également métallique du type acier, alliage au Ni du type NiCr, Inconel.

La couche métallique peut également être à base d'un alliage or-titane. Cet alliage est particulièrement avantageux car le titane paraît pouvoir stabiliser l'or, ce qui rend les couches protectrices évoquées ci-dessus optionnelles et même inutiles.

Selon une troisième variante, (alternative ou cumulative avec la première variante), le moyen prévenant la dégradation comprend la mise en contact du film muni de ses couches électroconductrices, sur au moins une de ses faces, avec une feuille à base de matériau polymère perméable à l'oxygène. Il s'est avéré qu'on pouvait aussi augmenter considérablement la durée de vie du système de cette manière. De façon simplifiée/imagée, tout se passe comme si cette feuille servait de " réservoir " à oxygène pour le film ou permettait de laisser passer de l'oxygène provenant d'une source d'oxygène, ce qui a un effet oxydant venant " compenser " l'effet réducteur des rayons ultraviolets sur les colorants.

Avantageusement, la feuille à base de matériau polymère présente une perméabilité à l'oxygène d'au moins 10, notamment d'au moins 20 ou 40 cm³/cm²/mm/cmHg, évaluée conformément à la norme ASTM-D1434. Il peut notamment s'agir de polymère(s) appartenant à la famille des polycarbonates, qui ont une perméabilité d'environ 55 cm³/cm²/mm/cmHg (notamment ceux de type souple/flexible).

A titre de comparaison, les feuilles de polyéthylènetéréphtalate (PET) habituellement utilisées ont une perméabilité de 0,3 cm³/cm²/mm/cmHg.

Le terme de " feuille" est à prendre au sens large : il peut s'agir d'un substrat porteur du film fonctionnel et/ou de feuille de protection et/ou de feuille permettant son feuilletage avec un substrat rigide et plus généralement son incorporation dans des vitrages de type vitrage multiple et/ou vitrage feuilleté. De façon générale, cette feuille est donc souple/flexible.

En fait, il est préférable que la (les) couche(s) électroconductrice(s) disposée(s) entre le film fonctionnel et la feuille perméable à l'oxygène présente(nt) une certaine " porosité " permettant le transfert d'oxygène. De même, on peut prévoir d'emprisonner suffisamment d'oxygène dans la feuille perméable pour qu'elle puisse en relarguer progressivement vers le film fonctionnel. Il est alors souhaitable que cette feuille soit en contact au moins partiel avec une source d'oxygène renouvelée. Si l'ensemble (film fonctionnel + couches électroconductrices + feuille(s) perméable(s) à l'oxygène) est destiné à être incorporé dans un vitrage de façon à ce que la ou les feuilles perméables soient enserrées entre le film et, par exemple, un substrat rigide qui n'est pas perméable à l'oxgygène (structure de vitrage feuilleté), on peut envisager de munir la feuille perméable de moyens périphériques de mise à l'air pour assurer le renouvellement de l'oxygène dans la feuille par exemple à l'aide de capillaires.

Si l'ensemble précité est destiné à être incorporé dans un vitrage multiple du type double-vitrage isolant, vitrage pariétodynamique, on peut disposer la feuille perméable de manière à la mettre en contact avec la lame de gaz intercalaire, de type lame d'air, en prévoyant de préférence un système de renouvellement d'air du type vitrage " respirant ".

Un mode de réalisation préféré de l'invention se présente sous la forme d'un vitrage feuilleté comprenant la séquence :
substrat rigide / feuille intercalaire feuille de protection / film fonctionnel muni de ses couches électroconductrices / feuille de protection / feuille intercalaire / substrat rigide.

Comme évoqué au début du présent texte, le substrat rigide peut être du type verre, acrylique comme le PMMA ou en polycarbonate rigide. La feuille intercalaire est en polymère thermoplastique du type PVB, EVA ou PU, et la feuille de protection du film fonctionnel peut être flexible du type PET ou polycarbonate souple (les couches électroconductrices de part et d'autre du film fonctionnel peuvent être des monocouches ou des empilements d'au moins deux couches).

Un second mode de réalisation préféré de l'invention se présente sous forme d'un vitrage multiple du type double-vitrage, comprenant la séquence : substrat rigide / feuille intercalaire / feuille de protection / film fonctionnel à couches électroconductrices / feuille de protection / lame de gaz intercalaire / substrat rigide.

L'invention concerne également un montage en vitrage multiple du type double-vitrage du système, où le film fonctionnel muni des couches électroconductrices, et de préférence d'au moins une feuille de protection sur chacun de ses côtés, est tendu dans la lame de gaz intercalaire séparant les deux substrats rigides du vitrage multiple.

La fixation peut se faire de différentes façons, notamment à l'aide de moyens de fixation et de mise sous tension, moyens de positionnement de type mécanique comme des cales, des espaceurs, un cadre disposé(es) à la périphérie du vitrage, notamment entre les deux substrats à leur périphérie. Le vitrage multiple peut en outre être conçu de façon à pouvoir être ouvert, notamment par un système mécanique à charnière par exemple, afin de rendre accessible la zone de gaz intercalaire où se trouve le système. Le système peut alors être conçu de façon à être amovible: on a ainsi un double-vitrage fonctionnalisé, où l'on peut aisément changer, nettoyer, réparer le système fonctionnel et éventuellement les substrats rigides du vitrage eux-mêmes si nécessaire.

On prévoit également de préférence des moyens d'étanchéité périphérique de la lame de gaz intercalaire. S'il est nécessaire de renouveler le gaz (l'air) de la lame de gaz, on peut prévoir d'ouvrir périodiquement le vitrage s'il est conçu de façon à être ouvrant, ou de munir les moyens d'étanchéité périphériques du type joints (avec dessicateur) de capillaires.

Cette structure en vitrage multiple est particulièrement adéquate pour mettre en oeuvre la troisième variante, en choisissant comme feuille de protection " côté lame de gaz " une feuille hautement perméable à l'oxygène, avec du gaz intercalaire sous forme d'air de préférence renouvelable dans un montage de type vitrage respirant.

Qu'il s'agisse d'un vitrage feuilleté ou d'un vitrage multiple, on peut donc selon l'invention sélectionner au moins une des feuilles dites " de protection " sous forme d'une feuille perméable à l'oxygène du type polycarbonate ou plexiglas (souple) et/ou sélectionner au moins une des couches électroconductrices en un matériau métallique de type Ag ou Au.

Ces feuilles de protection servent aussi de substrats porteurs souples au film fonctionnel.

Le système selon l'invention est de préférence muni d'un filtre aux rayons ultraviolets, pour en atténuer les effets préjudiciables sur les éléments actifs et en particulier sur les colorants dichroïques. Un mode de réalisation de filtre ultraviolet consiste, dans les structures de vitrage feuilleté/multiple décrites plus haut, à feuilleter le verre (le substrat rigide) extérieur avec un substrat rigide additionnel, par l'intermédiaire d'une feuille ou d'une pluralité de feuilles de polymère à propriétés de filtre vis-à-vis des ultraviolets, par exemple à base de polyuréthane PU, de polyvinyl butyral PVB ou d'éthylène vinylacétate EVA traité de façon appropriée, et éventuellement à feuilleter de cette manière le second verre également. Un autre mode de réalisation, notamment dans le cas d'une structure feuilletée, consiste à utiliser au moins une feuille de polymère à propriétés de filtre anti-ultraviolets en tant que feuille intercalaire entre au moins une des feuilles de protection du film fonctionnel et un des substrats rigides. Le feuilletage au moins d'un côté du vitrage multiple peut aussi apporter la fonctionnalité d'un blindage.

On détaille ci-après les différents composants du film fonctionnel à proprement dit.

De préférence, les éléments actifs du type cristaux liquides sont sous forme de gouttelettes dispersées dans le médium, avec les colorants dichroiques dissous au sein desdites gouttelettes. En effet, ces colorants étant en fait des molécules de type organique, à coefficient d'absorption anisotrope, si l'on veut obtenir une variation de l'absorption lumineuse du vitrage (donc une variation de transmission lumineuse) couplée avec une variation de sa diffusion lumineuse de façon électrocommandée, il est nécessaire que les éléments actifs vis-à-vis de la diffusion lumineuse soient étroitement associés avec les colorants.

Ces colorants dichroïques peuvent être par exemple du type des colorants pléochroïques, choisis dans la famille des dérivés de diazoquinones ou des dérivés d'anthraquinones.

Avantageusement, on peut sélectionner le pourcentage en poids de colorants dichroïques par rapport aux éléments actifs vis-à-vis de la diffusion lumineuse, (à savoir les particules polarisantes ou les cristaux liquides) dans une gamme comprise entre 0,1 et 3%, notamment entre 0,5 et 2%. Cette proportion est judicieuse à différents titres, en prenant en compte un certain nombre de paramètres, dont la limite de solubilité des colorants dans les gouttelettes, la taille des gouttelettes, la valeur de transmission lumineuse visée à l'état décoloré/transparent du système en fonction du type d'éléments actifs et du type de médium utilisés, ...

En ce qui concerne les cristaux liquides, ceux-ci peuvent être du type " NCAP ", notamment ceux utilisés dans le vitrages " Priva-Lite", ou " PDLC ", qui ont été mentionnés plus haut. En règle générale, leur biréfringence est comprise entre 0,1 et 0,2, elle est variable notamment en fonction du médium utilisé, de l'ordre de 0,1 si le polymère du médium est de type polyuréthane (PU) et de l'ordre de 0,2 s'il est de type alcool polyvinylique (PVA).

Ce médium est en effet de préférence à base d'un polymère de la famille des PU (latex) et/ou des PVA, généralement préparé en phase aqueuse dans une proportion de polymères de 15 à 50% en poids par rapport à l'eau.

On a vu plus haut qu'en ce qui concerne les systèmes à particules polarisantes, celles-ci combinaient en fait un effet vis-à-vis de la diffusion lumineuse et surtout un effet colorant jouant sur la transmission lumineuse.

Les éléments actifs vis-à-vis de la diffusion lumineuse sont avantageusement sous forme de gouttelettes de diamètre moyen compris entre 0,5 et 3 µm, notamment entre 1 et 2,5 µm, dispersées dans le médium. La taille des gouttelettes dépend d'un certain nombre de paramètres, dont notamment la facilité d'émulsion des éléments actifs dans le médium considéré. De préférence, ces gouttelettes représentent entre 120 à 220% en poids du médium, notamment entre 150 et 200% en poids, hormis le solvant, généralement aqueux, dudit médium.

De manière particulièrement préférée, on choisit des cristaux liquides sous forme de gouttelettes d'un diamètre d'environ 2,5 µm quand le médium est à base de latex de polyuréthane, (biréfringence d'environ 0,1) et d'un diamètre d'environ 1 µm quand le médium est plutôt à base de polyvinylalcool (biréfringence d'environ 0,2). La taille des gouttelettes peut être sélectionnée notamment lors de la préparation de l'émulsion par les conditions choisies, notamment la durée et l'ampleur de l'agitation provoquées pour faire l'émulsion, et/ou la viscosité du mélange, viscosité, que l'on peut régler par les conditions de température du mélange à émulsionner et/ou par l'ajout d'additifs du type tensio-actifs. L'addition des colorants modifie également l'équilibre de l'émulsion.

Il peut être ainsi avantageux de refroidir la préparation à émulsionner quand le médium est en latex de polyuréthane (par exemple à moins de 15°C, notamment entre 5 et 10°C).

Une fois l'émulsion avec le diamètre de gouttelettes voulue obtenue, on la fige dans ces conditions en ajoutant des stabilisants appropriés.

La combinaison d'éléments actifs vis-à-vis de la diffusion lumineuse et de ceux actifs vis-à-vis de la transmission lumineuse, à savoir les colorants dichroïques associés aux cristaux liquides ou les particules polarisantes colorantes, permet d'obtenir des vitrages qui peuvent être à volonté diffusants ou non diffusants et clairs ou foncés. Ces vitrages peuvent ainsi présenter un contraste d'au moins 3, voire d'au moins 5 ou 10 et plus entre leur état sous tension et leur état hors tension. On définit le contraste par le rapport des transmissions lumineuses du vitrage à l'état le plus clair/transparent (état correspondant généralement donc à l'état sous tension) et à l'état le plus foncé/opaque (état hors tension).

Ces systèmes à double fonctionnalité ont de nombreuses applications déjà évoquées, notamment pour des vitrages extérieurs de bâtiment, vitrages de toiture, ou vitrage pour automobile du type toit-auto, leur durabilité accrue grâce à l'invention autorisant des applications en extérieur, et bien sûr aussi pour vitrages intérieurs, de cloisonnement notamment. On peut aussi les utiliser pour équiper les fenêtres/hublots de tout moyen de transport du type train, avion, bâteau.

Une autre application intéressante concerne tous les dispositifs d'affichage, écrans de visualisation.

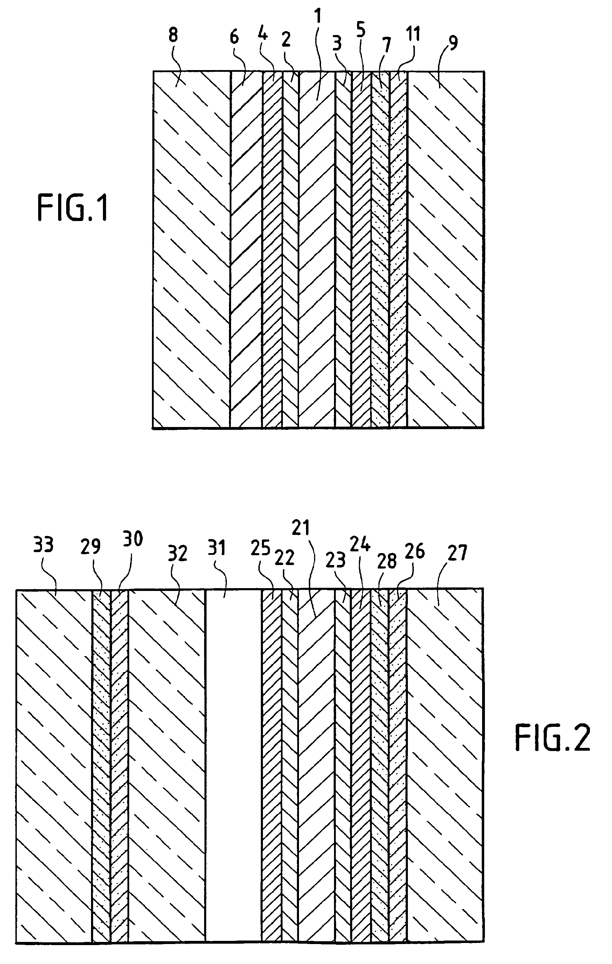

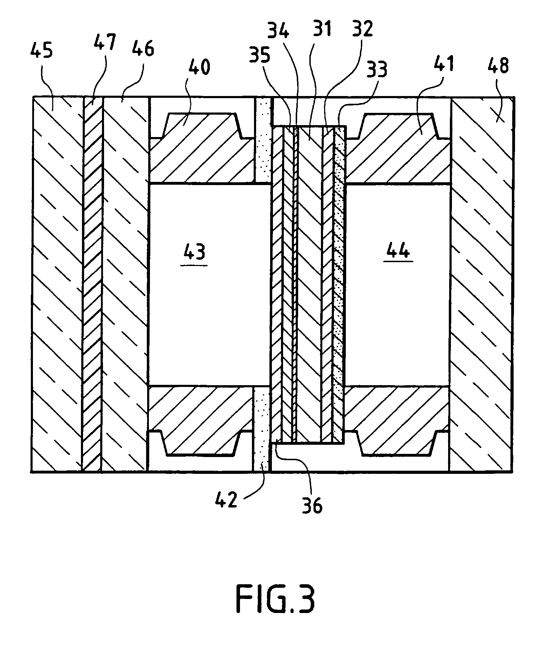

L'invention sera détaillée ci-après à l'aide d'exemples non limitatifs illustrés par les figures suivantes :
□ **figure 1** : un vitrage feuilleté selon l'invention,
□ **figure 2** **:** un double-vitrage selon l'invention.
□ **figure 3** **:** un second double-vitrage selon l'invention

### EXEMPLE 1

Celui-ci se rapporte au vitrage feuilleté représenté de façon schématique à la figure 1 (sans respect des échelles entre les différents matériaux représentés pour en faciliter la lecture).

Sa structure générale est la suivante : il comporte le film fonctionnel à proprement dit 1 muni sur l'une de ses faces d'une couche 2 électroconductrice transparente en oxyde d'indium dopé à l'étain ITO et sur l'autre de ses faces d'un empilement 3 de couches conductrices transparentes NiCr/Au/NiCr, avec les deux couches de NiCr de 1 nm d'épaisseur et la couche d'Au de 6 nm d'épaisseur.

Ce film à couches conductrices 1, 2, 3 est muni de deux feuilles 4, 5 de PET de 175 µm d'épaisseur, et feuilleté à deux verres 8, 9 (des verres silicosodocalciques clairs d'épaisseur 2 mm) d'un côté par une feuille intercalaire 6 en PVB d'épaisseur 0,76 mm, et de l'autre côté par deux feuilles 7, 11 de PVB traité anti-ultraviolet (le système d'alimentation électrique est réalisé de manière connue et non représenté/détaillé ici).

Le film 1 est d'épaisseur 30 µm. Il est constitué d'un médium sous forme de polyuréthane (PU) à 40% en poids préparé dans de l'eau, dans lequel sont dispersées des micro-gouttelettes de cristaux liquides du type NCAP d'environ 1,5 µm de diamètre moyen et de biréfringence 0,1, dans une proportion en poids de 165% par rapport au PU hormis le solvant. Les micro-gouttelettes contiennent 1% en poids d'un colorant dichroïque de type pléochroïque dissous, et conférant une teinte sombre, dans les noirs à l'état hors tension. Ce film est obtenu en faisant une émulsion sous forte agitation entre les cristaux liquides dans lequel on a dissout les colorants et le médium, puis en formant le film par coulée sur la feuille de PET préalablement munie de la couche électroconductrice en ITO. Le film après séchage pour retirer le solvant du médium, est calandré avec la seconde feuille de PET munie de la couche métallique.

Cette structure illustre la seconde variante de l'invention, à savoir la substitution d'une des couches conductrices classiques en ITO par une couche conductrice en métal.

Quand il est mis sous tension, le vitrage présente un état non diffusant, avec un flou d'au plus 8%, et clair, avec une valeur de transmission lumineuse T_{L} selon l'illuminant D₆₅ de 40%. Hors tension, il est diffusant, avec un flou d'au moins 96%, et foncé, avec une T_{L} de 10%. On atteint ainsi un contraste C d'environ 4. (Le flou est défini comme le rapport de la transmission diffuse sur la transmission totale mesurées à 550 nm).

A noter que le vitrage est donc ici muni d'un filtre ultraviolet, en l'occurrence formé par les deux feuilles de PVB traitées anti-ultraviolet 7, 11, chacune d'épaisseur 0,76 mm, venant se substituer à une feuille intercalaire en PVB standard comme la feuille de PVB 6. Le montage s'effectue de façon à ce que ce soit le verre 9 qui soit tourné vers l'extérieur.

Le vitrage ainsi constitué a été soumis à un test de vieillissement accéléré selon le cycle " jour " de la norme SAE J 1885 (Society of Automotive Engineers), par exposition à un rayonnement continu à 0,55 W/nm/m² de longueur d'onde 340 nm, à 90°C au panneau noir. Il a résisté à la dégradation pendant une durée d'exposition de 240 heures (c'est-à-dire que la différence ΔE* selon le système de colorimétrie (L*, a*,b*) entre l'état du vitrage à l'instant t et son état à l'instant initial tₒ, quand le vitrage est hors tension, est restée inférieure ou égale à 5 pendant ce laps de temps).

### EXEMPLE COMPARATIF 1

A titre de comparaison, le même test a été subi par un vitrage en tout point identique au vitrage de l'exemple 1, mais utilisant à la place de l'empilement NiCr/Au/NiCr une seconde couche d'lTO identique à la première : ce vitrage comparatif n'a résisté que 70 heures, ce qui correspond donc à une durée de vie plus de trois fois plus faible que pour le vitrage de l'exemple 1 conforme à l'invention.

### EXEMPLE 2

Celui-ci se rapporte également à un vitrage feuilleté selon la structure représentée à la figure 1.

On a utilisé dans cet exemple un autre type de film fonctionnel 1, permettant d'obtenir un contraste C plus élevé : d'épaisseur 30 µm, il est constitué d'un médium avec un latex PU et PVA préparé dans de l'eau à 20% en poids, dans lequel sont dispersées des gouttelettes de cristaux liquides de type NCAP de diamètre environ 1 µm et de haute biréfringence, égale à 0,2, dans une proportion en poids par rapport au latex PU + PVA d'environ 165% hors solvant.

Dans ces gouttelettes sont dissous 2% du même colorant dichroïque sombre qu'à l'exemple 1.

Ce vitrage présente à l'état sous tension un état non diffusant avec un flou d'au plus 15% et une T_{L} de 30 %. Hors tension, il est diffusant avec un flou de 100% et une T_{L} de 2%. On atteint ainsi un contraste C de 15.

Ce vitrage muni du filtre aux ultraviolets a subi le même test de vieillissement accéléré que l'exemple 1 : il a résisté à la dégradation 200 heures, selon le même critère.

### EXEMPLE COMPARATIF 2

Cet exemple 2 comparatif est identique à l'exemple 2, mis à part le fait qu'il utilise une seconde couche conductrice en ITO plutôt qu'un empilement NiCr/Au/NiCr. Il n'a résisté que 60 heures au test de vieillissement, ce qui correspond donc à une durée de vie trois fois plus faible que celle de l'exemple 2 conforme à l'invention.

### EXEMPLE 3

Cet exemple se rapporte au double-vitrage très schématiquement représenté en figure 2.

Il comporte le film fonctionnel 21 muni sur chacune de ses faces d'une couche 22, 23 d'lTO (même film fonctionnel et mêmes couches d'lTO qu'à l'exemple 1). Ce film à couches 21, 22, 23 est muni sur l'une de ses faces d'une feuille 24 en PET identique à la couche 4 en PET de l'exemple 1 et sur l'autre de ses faces d'une feuille 25 en polycarbonate souple d'épaisseur 175 µm. La couche 22 d'lTO en contact avec la feuille 25 en polycarbonate est déposée par pulvérisation cathodique de façon à présenter une porosité suffisante (vis-à-vis de l'oxygène).

Du côté de la feuille 24 en PET, on a ensuite deux feuilles en PVB 26, 28 anti-ultraviolet (comme les feuilles 7, 11 de la figure 1), puis un substrat en verre 27.

Du côté de la feuille 25 en polycarbonate, il y a ensuite une lame d'air intercalaire 31, puis un verre 32 (identique aux autres verres du vitrage).

Ce verre 32 est également muni d'un filtre aux ultraviolets composé de deux feuilles de PVB traitées anti-ultraviolet 29, 30 (identiques aux feuilles 26, 28) et feuilletées à un troisième verre 33 identique aux deux autres verres.

Par souci de clarté, on n'a pas représenté le système d'alimentation électrique du film 21, ni le système de montage du double-vitrage.

Ce vitrage illustre donc la troisième variante de l'invention, où l'on a substitué l'une des feuilles de PET par une feuille de polycarbonate hautement perméable à l'oxygène et en contact permanent avec la lame d'air du double-vitrage (en munissant de préférence le vitrage d'ouvertures permettant le renouvellement de l'air de la lame d'air).

### EXEMPLE 4

Cet exemple se rapporte au double-vitrage très schématiquement représenté en figure 3.

Il comporte un film fonctionnel 31 identique à celui de l'exemple précédent , muni d'un côté d'un empilement 32 de couches conductrices NiCr/Au/NiCr (comme à l'exemple 1) puis d'une feuille 33 en PET comme à l'exemple précédent, et de l'autre côté d'un empilement de couches conductrices comprenant une couche-barrière 34 côté film en NiCr d'environ 1 nm puis d'une couche 35 en ITO comme la couche 22 de l'exemple 3. Cet empilement est recouvert d'une autre feuille 36 de PET identique à la feuille 33. Cet ensemble est monté dans l'entre-verre d'un double-vitrage à l'aide d'espaceurs creux périphériques 40, 41 et calés par un espaceur à base de polymère 42, selon un montage similaire à celui proposé dans le brevet US-5 784 853 concernant un film de PET muni d'une couche de réflexion du rayonnement thermique également tendu dans l'entre-verre d'un double-vitrage. On se reportera à ce brevet concernant le choix des matériaux pour ces espaceurs et le système d'étanchéité périphérique prévu. La lame de gaz (air ou oxygène de préférence) se trouve ainsi séparée en deux zones 43, 44 de part et d'autre du système fonctionnel de l'invention.

Le substrat rigide externe est constitué de deux substrats de verre 45, 46 feuilletés par une feuille 47 d'EVA à propriétés anti-UV. Le substrat rigide interne 48 est un substrat de verre monolithique. Alternativement, il peut être feuilleté de façon similaire au substrat rigide externe.

Avantageusement, on peut concevoir le montage périphérique du double-vitrage de façon à rendre accessible l'entre-verre pour nettoyer les faces internes des substrats rigides et/ou renouveler l'air des zones 43, 44 et/ou procéder au remplacement du système fonctionnel si besoin.

Il est muni de d'un filtre ultraviolet, côté extérieur. On peut en prévoir un autre côté intérieur.

Il a été constaté qu'un tel vitrage avait approximativement une durée de vie au moins trois fois plus longue qu'un vitrage en tout point identique mais ayant une feuille de PET à la place de la feuille 25 en PC.

Dans cet exemple, la couche-barrière en NiCr est optionnelle : si on la supprime, on a alors d'un côté du film à cristaux liquides une couche conductrice standard en ITO et de l'autre côté une couche conductrice selon l'invention, ce qui suffit déjà à augmenter de façon notable la durée de vie du système.

En conclusion, l'invention a permis de découvrir comment pallier à la dégradation prématurée des vitrages à diffusion électrocommandable et à colorants dichroïques ou particules polarisantes, en mettant en oeuvre différents moyens pour inhiber/prévenir/compenser le phénomène de photoréduction des colorants dichroïques/des particules polarisantes elles-mêmes dichroïques.

Il va de soi que les trois variantes de l'invention peuvent être cumulées, c'est-à-dire que l'on peut prévoir de munir les films fonctionnels à la fois de couches conductrices métalliques et de feuilles de polymère perméable à l'oxygène. On peut donc utiliser soit une couche conductrice selon l'invention en gardant l'autre couche standard, soit deux couches conductrices selon l'invention. La couche selon l'invention peut comporter un matériau à base d'oxyde métallique dopé avec une "barrière" à l'interface avec le film à cristaux liquides (à base de matériau dépourvu de propriétés photocatalytiques de préférence), soit supprimer complètement ce type de matériau, la découverte de l'invention étant la suppression du contact direct entre ce matériau et le film à cristaux liquides. L'autre variante non exclusive des précédentes consiste à modifier le niveau de perméabilité de l'oxygène d'au moins une des feuilles de protection du système.

L'invention permet d'élargir les applications de tels vitrages, en visant aussi des applications en extérieur où les vitrages sont particulièrement exposés aux rayonnements ultraviolets solaires, même dans des configurations particulièrement sollicitantes, c'est-à-dire en position horizontale ou oblique (toit-auto, vitrage de toiture, ...). L'invention s'est révélée efficace même pour les vitrages à fort contraste et/ou quand le taux de colorant est relativement élevé.

## Revendications

1. Système électrocommandable à diffusion et/ou transmission lumineuse variable comprenant un film (1, 21) fonctionnel muni de couches électroconductrices (2, 3, 22, 23), ledit comportant des éléments actifs sous forme de particules polarisantes à effet colorant, ou de cristaux liquides associés à des colorants dichroïques, et les éléments actifs étant en suspension dans un médium, ***caractérisé en ce que*** ledit système est muni de moyen(s) prévenant/compensant la dégradation par photoréduction d'au moins une partie des éléments actifs, notamment la degradation des colorants dichroïques et/ou celle des particules polarisantes à effet colorant,
le moyen prévenant la dégradation par photoréduction comprenant l'utilisation d'au moins une des deux couches électroconductrices sous forme d'une couche multi-composants comprenant une couche conductrice à base d'oxyde métallique dopé du type SnO₂ : F ou ITO isolée physiquement du film fonctionnel (1, 21) par au moins une couche-barrière de nature chimique différente,
et/ou
le moyen prévenant la dégradation par photoréduction comprenant la sélection d'au moins une des deux couches électroconductrices (3) sous forme d'une couche mono ou multi-composants essentiellement métailique(s),
et/ou
le moyen prévenant la dégradation par photoréduction comprenant la mise en contact du film muni des couches électroconductrices (21, 22, 23), sur au moins une de ses faces, avec une feuille (25) à base de matériau polymère perméable à l'oxygène,

2. Système selon la revendication 1 ***caractérisé en ce que*** la ou les couches barrière sont essentiellement métalliques, notamment en alliage nickel-chrome, ou à base de silicium ou de diélectrique non photocatalytique comme l'oxyde de silicium ou en nitrure de silicium ou oxynitrure de silicium ou nitrure d'aluminium.

3. Système selon l'une des revendications précédentes ***caractérisé en ce que*** les couches-barrières ont une épaisseur de moins de 5 nm de préférence, notamment entre 0,5 et 3 nm.

4. Système selon l'une des revendications précédentes ***caractérisé en ce que*** la couche électroconductrice essentiellement métallique (3) est choisie à base d'argent ou d'or, et de préférence munie sur au moins une de ses faces d'une couche protectrice plus mince, notamment également métallique du type acier, alliage NiCr.

5. Système selon l'une des revendications précédentes ***caractérisé en ce que*** la couche électroconductrice essentiellement métallique est choisie à base d'un alliage or-titane.

6. Système selon l'une des revendications précédentes ***caractérisé en ce que*** la feuille (25) à base de matériau polymère présente une perméabilité à l'oxygène d'au moins 10, notamment d'au moins 20 ou 40 cm³/cm²/mm/cmHg selon la norme ASTM-D1434, et appartient notamment à la famille des polycarbonates.

7. Système selon l'une des revendications précédentes ***caractérisé en ce que*** la feuille (25) perméable à l'oxygène protège le film fonctionnel (21) et/ou fait fonction de substrat porteur et/ou autorise son feuilletage ou assemblage quand il est incorporé dans des vitrages multiples et/ou feuilletés.

8. Système selon l'une dès revendications précédentes ***caractérisé en ce que*** la feuille (25) perméable à l'oxygène est en contact au moins partiel avec une source d'oxygène de préférence renouvelée, notamment en la munissant de moyens périphériques de mise à l'air, notamment dans une structure de vitrage feuilleté et/ou en la disposant au contact de la lame de gaz intercalaire (31) dans une structure de vitrage multiple.

9. Système selon l'une des revendications précédentes, ***caractérisé en ce qu'il*** est sous forme d'un vitrage feuilleté, comprenant notamment la séquence : substrat rigide(8)/feuille intercalaire(6)/feuille de protection(4)/film fonctionnel à couches électroconductrices (1,2,3)/feuille de protection (5)/feuille(s) intercalaire(s)(10, 11)/substrat rigide(9).

10. Système selon l'une des revendications 1 à 8 ***caractérisé en ce qu'il*** est sous forme de vitrage multiple, notamment de double-vitrage, comprenant notamment la séquence : substrat rigide(27)/feuille(s) intercalaire(s)(26, 28)/feuille de protection(24)/film fonctionnel à couches électroconductrices(21, 22, 23)/feuille de protection(25)/lame de gaz intercalaire(31)/substrat rigide(32).

11. Système selon l'une des revendications 1 à 8 ***caractérisé en ce qu'il*** est sous forme d'un vitrage multiple où le film fonctionnel (31) muni des couches électroconductrices, et de préférence d'une feuille de protection (33, 36) sur chacun de ses côtés, est tendu dans la lame de gaz intercalaire séparant les deux substrats rigides du vitrage, notamment au moyens mécaniques du type cales, un cadre ou espaceurs appropriés disposés entre les deux substrats rigides (45, 46, 48) à leur périphérie.

12. Système selon la revendication 11 ***caractérisé en ce que*** le vitrage est ouvrant et/ou le film fonctionnel amovible.

13. Système selon l'une des revendications 9 ou 12 ***caractérisé en ce qu'au*** moins une des feuilles de protection (25) du film fonctionnel est perméable à l'oxygène, du type polycarbonate, et/ou au moins une des couches électroconductrices (3) est métallique du type Ag, Au.

14. Système selon l'une des revendications 1 à 13 ***caractérisé en ce que*** le système est muni d'un filtre aux rayons ultraviolets, comprenant notamment au moins une feuille intercalaire filtrante à base de polymère (7, 11 ; 26, 28 ; 29, 30) du type PU, PVB ou EVA feuilletant au moins un des substrats rigides à un substrat rigide supplémentaire, ou disposée entre une feuille de protection du film fonctionnel et un des substrats rigides.

15. Système selon l'une des revendications précédentes, ***caractérisé en ce que*** les cristaux liquides sont sous forme de gouttelettes dispersées dans le médium, les colorants dichroïques étant dissous au sein desdites gouttelettes.

16. Système selon l'une des revendications précédentes, ***caractérisé en ce que*** les colorants dichroïques sont choisis dans la famille des dérivés de diazoquinones ou des dérivés d'anthraquinones.

17. Système selon l'une des revendications précédentes, ***caractérisé en ce que*** le pourcentage en poids de colorants dichroïques par rapport aux cristaux liquides est compris entre 0,1 et 3%, notamment entre 0,5 et 2%.

18. Système selon l'une ides revendications précédentes, ***caractérisé en ce que*** le médium comporté au moins un polymère de la famille des polyuréthanes et/ou de la famille des alcools polyvinyliques préparé dans un solvant, notamment déposé en phase aqueuse, dans une proportion en poids de 15 à 50% par rapport audit solvant.

19. Système selon l'une des revendications précédentes, ***caractérisé en ce que*** les particules polarisantes à effet colorant ou les cristaux liquides sont sous forme de gouttelettes d'un diamètre de 0,5 à 3 µm, notamment de 1 à 2,5 µm, dispersées dans le médium, notamment selon un pourcentage en poids de 150 à 200% par rapport au médium hormis le solvant.

20. Système selon l'une des revendications précédentes ***caractérisé en ce que*** les cristaux liquides sont sous forme de gouttelettes d'un diamètre d'environ 2,5 µm dans un médium à base de latex de polyuréthane et d'un diamètre d'environ 1 µm dans un médium à base de polyvinylalcool.

21. Système selon l'une des revendications précédentes ***caractérisé en ce qu'il*** présente un contraste C entre son état diffusant et son état transparent d'au moins 3, notamment d'environ 5 ou plus.

22. Application du système selon l'une des revendications précédentes à des vitrages électrocommandables à diffusion et transmission lumineuses variables ou à des écrans de visualisation.

## Claims

1. Electrically controllable system having variable light scattering and/or transmission, comprising a functional film (1, 21) provided with electrically conducting layers (2, 3, 22, 23), the said film having active elements in the form of polarizing particles with a dye effect, or of liquid crystals associated with dichroic dyes, and the active elements being in suspension in a medium, ***characterized in that*** the said system is provided with one or more means preventing/compensating for degradation by photoreduction of at least some of the active elements, especially degradation of the dichroic dyes and/or that of the polarizing particles with a dye effect,
the means preventing degradation by photoreduction comprising the use of at least one of the two electrically conducting layers in the form of a multicomponent layer comprising a conducting layer based on a doped metal oxide of the F:SnO₂ or ITO type, the said layer being physically isolated from the functional film (1, 21) by at least one barrier layer of a different chemical nature,
and/or
the means preventing degradation by photoreduction comprising selecting at least one of the two electrically conducting layers (3) in the form of an essentially metallic monolayer or multi-component layer,
and/or
the means preventing degradation by means of photoreduction comprising bringing the film provided with the electrically conducting layers (21, 22, 23) into contact, on at least one of its sides, with a sheet (25) based on an oxygen-permeable polymer material.

2. System according to Claim 1, ***characterized in that*** the barrier layer or layers is or are essentially metallic, especially made of a nickel-chromium alloy, or based on silicon or a non-photocatalytic dielectric such as silicon oxide or silicon nitride or silicon oxynitride or aluminium nitride.

3. System according to one of the preceding claims, ***characterized in that*** the barrier layers have a thickness of less that 5 nm preferably, and especially between 0.5 and 3 nm.

4. System according to one of the preceding claims, ***characterized in that*** the essentially metallic electrically conducting layer (3) is chosen based on silver or gold, and is preferably provided on at least one of its faces with a thinner protective layer, which is also especially metallic of the steel or NiCr alloy type.

5. System according to one of the preceding claims, ***characterized in that*** the essentially metallic electrically conducting layer is chosen based on a gold-titanium alloy.

6. System according to one of the preceding claims, ***characterized in that*** the sheet (25) based on a polymer material has an oxygen permeability of at least 10 and especially of at least 20 or 40 cm³/cm²/mm/cmHg according to the ASTM-D1434 standard, and especially belongs to the polycarbonate family.

7. System according to one of the preceding claims, ***characterized in that*** the oxygen-permeable sheet (25) protects the functional film (21) and/or acts as a carrier substrate and/or allows its lamination or assembly when it is incorporated in multiple and/or laminated glazing units.

8. System according to one of the preceding claims, ***characterized in that*** the oxygen-permeable sheet (25) is in at least partial contact with a preferably renewable oxygen source, especially by providing it with peripheral venting means, especially in a laminated glazing structure, and/or by placing it in contact with the intermediate gas layer (31) in a multiple-glazing structure.

9. System according to one of the preceding claims, ***characterized in that*** it is in the form of a laminated glazing unit comprising, in particular, the sequence: rigid substrate (8)/intermediate sheet (6)/protective sheet (4)/functional film having electrically conducting layers (1, 2, 3)/protective sheet (5)/intermediate sheet(s) (10, 11)/rigid substrate (9).

10. System according to one of Claims 1 to 8, ***characterized in that*** it is in the form of a multiple-glazing unit, especially a double-glazing unit, comprising in particular the sequence: rigid substrate (27)/intermediate sheet(s) (26, 28)/protective sheet (24)/functional film having electrically conducting layers (21, 22, 23)/protective sheet (25)/intermediate gas layer (31)/rigid substrate (32).

11. System according to one of Claims 1 to 8, ***characterized in that*** it is in the form of a multiple-glazing unit in which the functional film (31) provided with the electrically conducting layers, and preferably with a protective sheet (33, 36) on each of its sides, is held taut in the intermediate gas layer separating the two rigid substrates of the glazing unit, especially by suitable mechanical means, of the wedge, frame or spacer type, placed between the two rigid substrates (45, 46, 48) around their periphery.

12. System according to Claim 11, ***characterized in that*** the glazing unit is openable and/or the functional film is removable.

13. System according to either of Claims 9 and 12, ***characterized in that*** at least one of the sheets (25) for protecting the functional film is permeable to oxygen, of the polycarbonate type, and/or at least one of the electrically conducting layers (3) is metallic, of the Ag or Au type.

14. System according to one of Claims 1 to 13, ***characterized in that*** the system is provided with a UV filter, comprising especially at least one filtering intermediate sheet (7, 11; 26, 28; 29, 30) based on a polymer of the PU, PVB or EVA type laminating at least one of the rigid substrates to an additional rigid substrate, or placed between a sheet for protecting the functional film and one of the rigid substrates.

15. System according to one of the preceding claims, ***characterized in that*** the liquid crystals are in the form of droplets dispersed in the medium, the dichroic dyes being dissolved within said droplets.

16. System according to one of the preceding claims, ***characterized in that*** the dichroic dyes are chosen from the family of diazoquinone derivatives or of anthraquinone derivatives.

17. System according to one of the preceding claims, ***characterized in that*** the percentage by weight of dichroic dyes with respect to the liquid crystals is between 0.1 and 3%, especially between 0.5 and 2%.

18. System according to one of the preceding claims, ***characterized in that*** the medium includes at least one polymer of the polyurethane family and/or of the polyvinyl-alcohol family prepared in a solvent, especially deposited in aqueous phase, in a proportion by weight of 15 to 50% with respect to the said solvent.

19. System according to one of the preceding claims, ***characterized in that*** the polarizing particles with a dye effect or liquid crystals are in the form of droplets with a diameter of 0.5 to 3 µm, especially 1 to 2.5 µm, these being dispersed in the medium, especially with a percentage by weight of 150 to 200% with respect to the medium excluding the solvent.

20. System according to one of the preceding claims, ***characterized in that*** the liquid crystals are in the form of droplets with a diameter of approximately 2.5 µm in a medium based on a polyurethane latex and with a diameter of approximately 1 µm in a medium based on polyvinyl alcohol.

21. System according to one of the preceding claims, ***characterized in that*** it has a contrast C between its scattering state and its transparent state of at least 3 and especially approximately 5 or more.

22. Application of the system according to one of the preceding claims to electrically controllable glazing units having variable light scattering and variable light transmission, or to display screens.

## Patentansprüche

1. Elektrisch steuerbares System mit variabler Lichtstreuung und/oder Lichttransmission, umfassend einen Funktionsfilm (1, 21), der mit elektrisch leitenden Schichten (2, 3, 22, 23) versehen ist, wobei der Film aktive Elemente in Form von polarisierenden Partikeln mit Farbwirkung oder von Flüssigkristallen, die dichroitischen Farbstoffen zugeordnet sind, aufweist und wobei die aktiven Elemente in einem Medium in Suspension sind, **dadurch gekennzeichnet, dass** das System mit (einem) Mittel(n) ausgestattet ist, die dem Nachlassen wenigstens eines Teils der aktiven Elemente, insbesondere dem Nachlassen der dichroitischen Farbstoffe und/oder dem der polarisierenden Partikel mit Farbwirkung, durch Photoreduktion vorbeugen/es durch Photoreduktion kompensieren,
wobei das Mittel zur Vorbeugung des Nachlassens durch Photoreduktion die Verwendung von wenigstens einer der beiden elektrisch leitenden Schichten in Form einer Mehrkomponentenschicht umfasst, die eine leitende Schicht auf Basis eines dotierten Metalloxids vom Typ SnO₂ : F oder ITO aufweist, welche von dem Funktionsfilm (1, 21) durch wenigstens eine Sperrschicht anderer chemischer Art physisch getrennt ist,
und/oder
wobei das Mittel zur Vorbeugung des Nachlassens durch Photoreduktion die Auswahl wenigstens einer der beiden elektrisch leitenden Schichten (3) in Form einer Schicht aus einer oder mehreren im Wesentlichen metallischen Komponente(n) umfasst,
und/oder
wobei das Mittel zur Vorbeugung des Nachlassens durch Photoreduktion das Inkontaktbringen des mit den elektrisch leitenden Schichten (21, 22, 23) versehenen Films, auf wenigstens einer seiner Seiten, mit einer Folie (25) auf Basis eines sauerstoffdurchlässigen Polymermaterials umfasst.

2. System nach Anspruch 1, **dadurch gekennzeichnet, dass** die Sperrschicht oder Sperrschichten im wesentlichen metallisch sind, insbesondere aus NickelChrom-Legierung bestehen, oder auf der Basis von Silizium oder eines nicht photokatalytischen Dielektrikums wie Siliziumoxid oder aus Siliziumnitrid oder Siliziumoxinitrid oder Aluminiumnitrid bestehen.

3. System nach einem der vorstehenden Ansprüche, **dadurch gekennzeichnet, dass** die Sperrschichten eine Dicke vorzugsweise von weniger als 5 nm, insbesondere zwischen 0,5 und 3 nm aufweisen.

4. System nach einem der vorstehenden Ansprüche, **dadurch gekennzeichnet, dass** die im Wesentlichen metallische elektrisch leitende Schicht (3) auf der Basis von Silber oder Gold gewählt ist und vorzugsweise auf wenigstens einer ihrer Seiten mit einer dünneren, insbesondere ebenfalls metallischen Schutzschicht vom Typ Stahl, NiCr-Legierung versehen ist.

5. System nach einem der vorstehenden Ansprüche, **dadurch gekennzeichnet, dass** die im Wesentlichen metallische elektrisch leitende Schicht auf der Basis einer Gold-Titan-Legierung gewählt ist.

6. System nach einem der vorstehenden Ansprüche, **dadurch gekennzeichnet, dass** die Folie (25) auf Polymermaterialbasis eine Sauerstoffdurchlässigkeit von wenigstens 10, insbesondere von wenigstens 20 oder 40 cm³/cm²/mm/cmHg entsprechend der Norm ASTM-D1434 aufweist und insbesondere zur Familie der Polykarbonate gehört.

7. System nach einem der vorstehenden Ansprüche, **dadurch gekennzeichnet, dass** die sauerstoffdurchlässige Folie (25) den Funktionsfilm (21) schützt und/oder als Trägersubstrat fungiert und/oder sein Schichten oder Verbinden zulässt, wenn er in Mehrfach- und/oder Verbundverglasungen eingebettet ist.

8. System nach einem der vorstehenden Ansprüche, **dadurch gekennzeichnet, dass** die sauerstoffdurchlässige Folie (25) mit einer vorzugsweise erneuerten Sauerstoffquelle in wenigstens teilweisen Kontakt ist, insbesondere **dadurch**, dass sie mit umfangseitigen Lüftungsmitteln, insbesondere in einer Verbundverglasungsstruktur versehen wird und/oder dass sie in Kontakt mit der Zwischengasfüllung (31) in einer Mehrfachverglasungsstruktur angeordnet wird.

9. System nach einem der vorstehenden Ansprüche, **dadurch gekennzeichnet, dass** es in Form einer Verbundverglasung mit insbesondere der Folge: starres Substrat (8) / Zwischenfolie (6) / Schutzfolie (4) / Funktionsfilm mit elektrisch leitenden Schichten (1, 2, 3) / Schutzfolie (5) / Zwischenfolie(n) (10, 11) / starres Substrat (9) vorliegt.

10. System nach einem der Ansprüche 1 bis 8, **dadurch gekennzeichnet, dass** es in Form einer Mehrfachverglasung, insbesondere Doppelverglasung mit insbesondere der Folge: starres Substrat (27) / Zwischenfolie(n) (26, 28) / Schutzfolie (24) / Funktionsfilm mit elektrisch leitenden Schichten (21, 22, 23) / Schutzfolie (25) / Zwischengasfüllung (31) / starres Substrat (32) vorliegt.

11. System nach einem der Ansprüche 1 bis 8, **dadurch gekennzeichnet, dass** es in Form einer Mehrfachverglasung vorliegt, bei der der Funktionsfilm (31), der mit den elektrisch leitenden Schichten und vorzugsweise auf jeder seiner Seiten mit einer Schutzfolie (33, 36) versehen ist, in der die beiden starren Substrate der Verglasung trennenden Zwischengasfüllung gespannt ist, insbesondere mit Hilfe mechanischer Mittel vom Typ Keile, einem Rahmen oder geeigneten Abstandshaltern, die zwischen den beiden starren Subtraten (45, 46, 48) an deren Umfang angeordnet sind.

12. System nach Anspruch 11, **dadurch gekennzeichnet, dass** die Verglasung geöffnet werden kann und/oder der Funktionsfilm lösbar ist.

13. System nach einem der Ansprüche 9 oder 12, **dadurch gekennzeichnet, dass** wenigstens eine der Schutzfolien (25) des Funktionsfilms sauerstoffdurchlässig, vom Typ Polykarbonat ist und/oder wenigstens eine der elektrisch leitenden Schichten (3) metallisch, vom Typ Ag, Au ist.

14. System nach einem der Ansprüche 1 bis 13, **dadurch gekennzeichnet, dass** das System mit einem UV-Strahlungsfilter ausgestattet ist, das insbesondere wenigstens eine filterende Zwischenfolie auf Polymerbasis (7, 11; 26, 28; 29, 30) vom Typ PU, PVB oder EVA umfasst, die wenigstens eines der starren Substrate mit einem zusätzlichen starren Substrat verbindet oder zwischen einer Schutzfolie des Funktionsfilms und einem der starren Substrate angeordnet ist.

15. System nach einem der vorstehenden Ansprüche, **dadurch gekennzeichnet, dass** die Flüssigkristalle in Form von in dem Medium dispergierten Tröpfchen vorliegen, wobei die dichroitischen Farbstoffe in den Tröpfchen gelöst sind.

16. System nach einem der vorstehenden Ansprüche, **dadurch gekennzeichnet, dass** die dichroitischen Farbstoffe aus der Familie der Diazochinon-Derivate oder der Anthrachinon-Derivate ausgewählt sind.

17. System nach einem der vorstehenden Ansprüche, **dadurch gekennzeichnet, dass** der Gewichtsprozentsatz der dichroitischen Farbstoffe gegenüber den Flüssigkristallen zwischen 0,1 und 3 %, insbesondere zwischen 0,5 und 2 % liegt.

18. System nach einem der vorstehenden Ansprüche, **dadurch gekennzeichnet, dass** das Medium wenigstens ein Polymer aus der Familie der Polyurethane und/oder aus der Familie der Polyvinylalkohole ist, das in einem Lösungsmittel, insbesondere in wässriger Phase abgeschieden, in einem Gewichtsverhältnis von 15 bis 50 % bezogen auf das Lösungsmittel hergestellt wird.

19. System nach einem der vorstehenden Ansprüche, **dadurch gekennzeichnet, dass** die polarisierenden Partikel mit Farbwirkung oder die Flüssigkristalle in Form von Tröpfchen mit einem Durchmesser zwischen 0,5 und 3 µm, insbesondere zwischen 1 und 2,5 µm vorliegen, die in dem Medium, insbesondere in einem Gewichtsprozentsatz von 150 bis 200 % bezogen auf das Medium, das Lösungsmittel ausgenommen, dispergiert sind.

20. System nach einem der vorstehenden Ansprüche, **dadurch gekennzeichnet, dass** die Flüssigkristalle in Form von Tröpfchen mit einem Durchmesser von etwa 2,5 µm in einem Medium auf Basis von Polyurethanlatex und mit einem Durchmesser von etwa 1 µm in einem Medium auf Basis von Polyvinylalkohol vorliegen.

21. System nach einem der vorstehenden Ansprüche, **dadurch gekennzeichnet, dass** es einen Kontrast C zwischen seinem lichtstreuendem Zustand und seinem transparenten Zustand von wenigstens 3, insbesondere etwa 5 oder mehr aufweist.

22. Anwendung des Systems nach einem der vorstehenden Ansprüche auf elektrisch steuerbare Verglasungen mit variabler Lichtstreuung und variabler Lichttransmission oder auf Bildschirme.
